Europäisches Patentamt

(19) European Patent Office

Office européen des brevets

(11) Numéro de publication : **0 140 724 B1**

## (12) FASCICULE DE BREVET EUROPÉEN

(45) Date de publication du fascicule du brevet : 21.10.87

(21) Numéro de dépôt : 84401662.6

(22) Date de dépôt : 13.08.84

(51) Int. Cl.⁴ : **C 12 P 19/06, E 21 B 43/22**

(54) Procédé de traitement d'un hétéropolysaccharide.

(30) Priorité : 30.08.83 FR 8313884

(43) Date de publication de la demande :
08.05.85 Bulletin 85/19

(45) Mention de la délivrance du brevet :
21.10.87 Bulletin 87/43

(84) Etats contractants désignés :
**AT DE FR GB SE**

(56) Documents cités :
**EP-A- 0 069 523**
**EP-A- 0 103 483**
**DD-A-  147 948**
**FR-A- 2 318 926**
**GB-A- 2 111 520**
**US-A- 4 299 825**

(73) Titulaire : **RHONE-POULENC CHIMIE**
**25, quai Paul Doumer**
**F-92408 Courbevoie Cedex (FR)**

(72) Inventeur : **Jarry, Alain**
**Le Paradis Maisonnais**
**F-79500 Melle (FR)**
Inventeur : **Gozard, Jean-Pierre**
**29, rue du Commandant Faurax**
**F-69006 Lyon (FR)**
Inventeur : **Kennel, Yves**
**2, rue Eloy Ricard**
**F-79500 Melle (FR)**
Inventeur : **Luccioni, Alain**
**25, rue Docteur Faquin**
**F-69500 Bron (FR)**

(74) Mandataire : **Tavernier, Colette et al**
**RHONE-POULENC INTERSERVICES Service Brevets**
**Chimie 25, Quai Paul Doumer**
**F-92408 Courbevoie Cedex (FR)**

Jouve, 18, rue St-Denis, 75001 Paris, France

**0 140 724**

## Description

L'invention concerne un procédé de traitement d'une solution aqueuse d'hétéropolysaccharide, en particulier de gomme xanthane, en vue d'améliorer ses caractéristiques de viscosité, de filtrabilité et d'injectabilité. Le procédé est particulièrement adapté pour traiter des moûts entiers de fermentation destinés à la préparation de fluides aqueux pour le déplacement du pétrole des gisements partiellement épuisés.

Les hétéropolysaccharides ou biopolymères obtenus par fermentation d'un hydrate de carbone sous l'action de bactéries du genre xanthomonas ou arthrobacter ou de champignons appartenant au genre sclerotium ont trouvé de nombreuses applications industrielles en raison de leurs propriétés épaississantes et viscosifiantes.

L'une des applications connue de ces hétéropolysaccharides de type Gomme Xanthane est la récupération secondaire et tertiaire du pétrole. Dans cette application on utilise des solutions aqueuses diluées à une concentration d'environ 300 à 3 000 ppm pour déplacer l'huile des réservoirs partiellement épuisés. La Gomme Xanthane se caractérise en effet par une haute viscosité à basse concentration, une grande insensibilité à la salinité et à la nature des sels et une grande stabilité aux contraintes mécaniques. Toutefois, les solutions préparées à partir des grades industriels soit à partir du moût de fermentation, soit par dilution de la poudre précipitée et séparée à partir du moût, présentent l'inconvénient majeur de colmater rapidement les pores des formations rocheuses dans lesquelles elles sont injectées, provoquant ainsi des augmentations de pression indésirables et empêchant rapidement toute récupération supplémentaire d'huile. On sait que les origines de ce colmatage sont dues à la présence d'une part de particules insolubles telles que débris cellulaires et bactéries non viables provenant de la fermentation, d'autre part d'un certain nombre d'agrégats translucides ou microgels notamment si la solution est préparée avec du biopolymère qui a été précipité à partir du moût de fermentation.

Différentes méthodes ont été proposées dans l'art antérieur pour améliorer la viscosité et/ou la filtrabilité et l'injectabilité des solutions de Gomme Xanthane, ces méthodes incluant des traitements thermiques, la floculation, des traitements enzymatiques, associés ou non à une filtration par exemple sur terres diatomées.

Dans le procédé décrit dans le brevet US-A-3 555 447 le bouillon est traité à pH 7-9, à la température de 65-77 °C pendant au moins 20 minutes, puis est dilué et filtré pour obtenir une solution clarifiée.

Le brevet US-A-3 501 578 décrit le traitement du moût à 80-130 °C pendant 10 à 120 minutes à pH 6,3-6,9 pour accroître la viscosité.

Le brevet US-A-3 729 460 préconise le traitement de la solution à pH alcalin conduisant à une structure modifiée.

Dans le FR-A-2 330 697 le traitement est effectué à une température supérieure à 100 °C pendant 1 à 300 minutes, la concentration en sels est au moins égale à 0,5 % en poids et la solution est filtrée. Le polymère traité en milieu salin serait physiquement différent du polymère qui n'a pas subi un tel traitement.

Le procédé décrit dans le brevet US-A-3 773 752 implique la dilution du moût de fermentation, l'addition d'un coagulant et une filtration subséquente et le brevet US-A-3 801 502 implique l'addition d'un alcool, d'un phénol ou de surfactants non ioniques au cours du processus de chauffage.

Selon FR-A-2 440 992 la teneur en sels est inférieure à 0,2 % et le chauffage est conduit à 60-98 °C pendant 2 à 60 minutes.

L'amélioration de la viscosité est encore décrite dans FR-A-2 318 926 qui préconise une pasteurisation à 99-104,4 °C pendant 1 à 5 minutes à pH 6-7 ou dans DD-A-147 988 qui préconise un chauffage à 80-110 °C pendant 5-30 minutes à un pH compris entre 6 et 7,5.

Dans tous les procédés décrits, le traitement par la chaleur est réalisé soit au pH naturel du moût de fermentation, soit en pH alcalin.

La clarification des solutions de xanthane a encore été réalisée par traitement enzymatique avec une protéase acide ou neutre à la température et au pH correspondant à l'activité de l'enzyme (GB-A-2 111 520). Il n'apparaît pas qu'une clarification pourrait être obtenue en l'absence d'enzyme.

La Demanderesse a trouvé que le traitement d'une solution d'hétéropolysaccharide et plus particulièrement d'un moût entier de fermentation dans des conditions de pH acide, de température et durée déterminées permettait d'augmenter la viscosité, la filtrabilité et l'aptitude à l'injection sans qu'il soit nécessaire de procéder à une filtration et sans modifier la structure de l'hétéropolysaccharide. D'autres avantages ressortiront de la description ci-après.

Conformément à l'invention, le procédé de traitement est caractérisé en ce qu'une solution aqueuse ayant une concentration en hétéropolysaccharide de 0,05 à 20 % en poids est soumise à un chauffage à une température comprise entre 60 et 110 °C pendant une durée de 5 à 45 minutes, le pH de la solution étant compris entre 3,5 et inférieur à 6.

La matière de départ pour le procédé selon la présente invention est un hétéropolysaccharide de poids moléculaire élevé obtenu par fermentation d'un hydrate de carbone sous l'action de microorganismes. Ces microorganismes peuvent être par exemple des bactéries appartenant au genre xanthomonas et plus particulièrement les espèces décrites dans Bergey's manual of determinative bacteriology (8e

2

édition — 1974 — Williams N. Wilkins C° Baltimore) telles que xanthomonas begoniae, xanthomonas campestris, xanthomonas carotae, xanthomonas hederae, xanthomonas incanae, xanthomonas malvacearum, xanthomonas papavericola, xanthomonas phaseoli, xanthomonas pisi, xanthomonas vasculorum, xanthomonas vesicatoria, xanthomonas vitians, xanthomonas pelargonii ; au genre arthrobacter et plus particulièrement les espèces arthrobacter stabilis, arthrobacter viscosus ; au genre erwinia ; au genre azotobacter et plus particulièrement l'espèce azotobacter indicus ; au genre Agrobacterium et plus particulièrement les espèces Agrobacterium radiobacter, Agrobacterium rhizogenes, Agrobacterium tumefaciens ; ou des champignons appartenant au genre sclerotium et plus particulièrement aux espèces sclerotium glucanicum, sclerotium rolfii, etc.

L'expérience a montré que certaines espèces sont capables de produire les polysaccharides avec une efficacité particulière. L'espèce X. campestris convient tout particulièrement bien pour la synthèse de la Gomme Xanthane.

On peut faire fermenter toute une variété d'hydrates de carbone avec les micro-organismes appartenant aux genres précités pour fabriquer l'hétéropolysaccharide utilisé dans le procédé selon l'invention. Les hydrates de carbone qui peuvent convenir comprennent le glucose, le saccharose, le fructose, le maltose, le lactose, l'amidon. La fermentation de l'hydrate de carbone se fait en général dans un milieu aqueux renfermant jusqu'à 100 g/l de glucide. On sait que le milieu de fermentation peut comprendre, en outre, une source de phosphore, une source de magnésium qui est un activateur d'enzymes, et une source d'azote qui peut être d'origine organique, minérale ou mixte organique-minérale.

La préparation de la gomme Xanthane est décrite dans de nombreuses publications et de nombreux brevets. On peut se référer par exemple aux brevets US-A-3 020 206, US-A-3 020 207, US-A-3 391 060, US-A-4 154 654.

Le biopolymère peut être récupéré du moût par précipitation à l'aide d'un agent de précipitation, par exemple l'isopropanol, filtration et séchage.

On peut appliquer le procédé de l'invention à des solutions obtenues par dissolution de biopolymère en poudre de qualité commerciale, mais dans une forme de réalisation avantageuse et préférentielle pour emploi ultérieur en récupération du pétrole, on applique le procédé au bouillon entier de fermentation.

A l'issue du processus de fermentation et production de l'hétéropolysaccharide, le bouillon contient normalement environ 15 à 50 g/litre de biopolymère et son pH est compris entre environ 6,5 et 7,5. On ajuste le pH de la solution entre 3,5 et inférieur à 6, au moyen d'un acide minéral ou organique tel que l'acide sulfurique, l'acide phosphorique, l'acide nitrique, l'acide formique, l'acide acétique.

Il n'est pas nécessaire de diluer le bouillon.

La solution de biopolymère (moût entier ou solution reconstituée) est chauffée jusqu'à une température comprise entre 60 et 110 °C et l'on maintient cette température pendant une période de 5 à 45 minutes.

Si l'on applique le procédé à un moût entier de fermentation, le pH est de préférence ajusté entre 4 et 5,5 et le traitement de chauffage est réalisé préférentiellement entre 80 et 100 °C pendant une durée de 15 à 30 minutes.

Après le traitement en milieu acide, on peut soumettre la solution de biopolymère à une séparation mécanique, par exemple filtration sur terres diatomées ou centrifugation, mais cette séparation n'est pas nécessaire si l'on a traité un moût de fermentation selon le procédé de l'invention.

Le biopolymère peut être isolé de la solution ou du moût par des moyens classiques, par exemple précipitation par un alcool inférieur, séchage par pulvérisation ou au tambour.

On peut également, si on le désire, ajouter un biocide ou une enzyme dans la solution qui a été traitée thermiquement ou à la poudre précipitée. En variante, si le biocide ou l'enzyme sont stables dans les conditions de chauffage en milieu acide que l'on utilise, ils peuvent être ajoutés avant le stade du traitement à la chaleur.

Les solutions d'hétéropolysaccharides qui résultent du procédé de traitement en milieu acide, de même que les poudres isolées à partir de ces solutions présentent un pouvoir viscosifiant, une filtrabilité et une aptitude à l'injection améliorées.

Une solution diluée telle qu'elle résulte du procédé de fermentation est un désavantage car elle ne peut être transportée économiquement. Le polymère sous forme de poudre pose des problèmes de redissolution sur le site d'utilisation. Il peut être avantageux dans certains cas de produire une solution concentrée de biopolymère. La concentration peut être réalisée par des moyens classiques comme l'évaporation ou l'ultrafiltration, cette dernière méthode étant préférée car plus économique et permettant de manière connue, et à l'échelle industrielle, de séparer les molécules de bas poids moléculaire des molécules de haut poids moléculaire et de concentrer les polymères sans modification de leurs propriétés rhéologiques. Il a été vérifié en particulier que l'ultrafiltration même à gradient de vitesse élevé, n'amène pas de modification sur le pouvoir viscosifiant et la filtrabilité des solutions.

La concentration par ultrafiltration peut être réalisée en utilisant des techniques et équipements connus par exemple des appareils à plaques, à spirales, à tubes. On préfère les appareils à plaques rainurées dans lesquels le polymère peut être soumis à des gradients de vitesse élevés de 1 000 à 10 000 $S^{-1}$, abaissant la viscosité apparente du produit de manière sensible, ce qui permet un véhiculage rapide dans des appareils industriels de grande surface (10-50 m² unitaire) et un transfert amélioré. Des appareils de ce type sont décrits dans les brevets et demandes de brevets publiés FR-A 2 127 155, 2 141 417, 2 392 696, 2 400 380 et 2 471 507. On peut utiliser des membranes disponibles commercialement telles que des membranes cellulosiques, des membranes minérales, des membranes polymériques comme les membranes en polyamide, polybenzymidazole, copolymère acrylique, polyacrylonitrile, polysulfone, polyfluorure de vinylidène, polyélectrolytes complexes dont les seuils de coupure varient de 10 à 100 000.

Le flux est fonction de la température, de la pression, de la vitesse de passage ainsi que de la viscosité et de la concentration du biopolymère. Il est de l'ordre de 5 à 50 l/h m$^2$ pour une vitesse linéaire de 0,5 à 5 m/s. On peut appliquer des températures allant de la température ambiante à environ 80 °C et des pressions de l'ordre de 1 à 15 bars, de préférence 1 à 6 bars.

On peut également purifier le moût pendant l'ultrafiltration en décomposant les matières protéinées qu'il contient par addition d'une enzyme protéolytique.

Selon un aspect particulier de l'invention, on peut encore purifier la solution de polysaccharide par diafiltration en lui ajoutant pendant ou après l'ultrafiltration de l'eau en continu ou périodiquement, à une vitesse correspondant sensiblement à celle du prélèvement de l'ultrafiltrat.

Le biopolymère purifié peut être utilisé directement sous forme de moût ou bien être récupéré sous forme de poudre par toute méthode connue.

L'ultrafiltration permet normalement d'obtenir des concentrations de 70 à 180 g de biopolymère/kg de moût. Elle peut être mise en œuvre avant le traitement thermique selon l'invention mais de préférence elle est réalisée après le traitement thermique.

Il a été trouvé que le traitement thermique en milieu acide selon l'invention permet d'améliorer les performances de l'ultrafiltration par rapport à un moût non traité thermiquement ou traité dans des conditions de pH neutre ou alcalin selon l'art antérieur.

En particulier, pour une même perte de charge aux bornes de l'ultrafiltre, le traitement de chauffage en milieu acide permet d'obtenir des solutions de biopolymère plus concentrées pour des débits plus importants d'alimentation. On peut ainsi obtenir des concentrations allant jusqu'à 200 et même 300 g/kg de moût.

Les solutions d'hétéropolysaccharides qui résultent du procédé de traitement selon l'invention, de même que les poudres isolées à partir de ces solutions, sont utiles dans toutes les applications de la gomme Xanthane et plus spécialement dans les applications nécessitant des produits clarifiés notamment dans les opérations de récupération assistée du pétrole.

Les exemples ci-après illustrent l'invention.

Exemple 1

On prélève deux fractions de 20 litres chacune à partir d'un moût de fermentation contenant 2 % de gomme Xanthane. On ajuste le pH à 5,5 par addition d'acide sulfurique concentré.

On fait subir en continu à l'une des fractions un traitement de 15 minutes à 100 °C puis on le refroidit à 25 °C. L'autre fraction (témoin) est maintenue à 25 °C pendant le même temps.

A titre de comparaison on effectue le même traitement sur des fractions du même moût dont le pH a été ajusté à 8,5 par addition de soude.

L'efficacité du traitement est déterminée par des mesures de viscosité et de filtrabilité sur des solutions diluées à la concentration de 1 000 ppm en polymère en utilisant pour la dilution une solution aqueuse contenant 9 % de sels (NaCl, CaCl$_2$ Rapport 10/1).

Test de filtrabilité à débit constant

Le pouvoir colmatant est déterminé en faisant passer la solution à débit constant correspondant à une vitesse de 80 ml/heure à travers un filtre poreux simulant une injection sur terrain.

A l'aide d'un capteur différentiel de pression, on mesure la perte de charge engendrée à l'entrée et à la sortie de ce milieu poreux après passage de 1 300 ml de solution.

L'indice de filtrabilité est le rapport des pressions obtenues en fin et début de passage.

Viscosité

Les mesures de viscosité sont effectuées à l'aide d'un viscosimètre Brookfield muni d'un adaptateur UL, à 25 °C et 7,3 S$^{-1}$.

(Voir tableau I page 5)

Tableau I

| Conditions du traitement: durée = 15 minutes | | Indice de filtrabilité | Viscosité en mPa.s |
|---|---|---|---|
| Température °C | pH | | |
| 25 | 5,5 | 1,77 | 45,4 |
| 100 | 5,5 | 1,39 | 58,7 |
| 25 | 8,5 | 1,91 | 46,3 |
| 100 | 8,5 | 2,98 | 44,4 |

Exemple 2

A partir de moûts de fermentation de diverses fabrications, on étudie l'influence du pH et de la température de traitement sur la viscosité et la filtrabilité des solutions. Dans tous les essais effectués sur des fractions de 15 l la durée du traitement est de 15 minutes. Après refroidissement à la température ambiante les échantillons sont dilués à la concentration de 1 000 ppm en gomme Xanthane dans de la saumure à 9 % pour déterminer l'indice de filtrabilité et la viscosité selon les tests décrits dans l'exemple 1.

Tableau II

| Essai | Origine du moût | Traitement | | Indice de filtrabilité | Viscosité en mPa.s |
|---|---|---|---|---|---|
| | | pH | Température °C | | |
| 1 | A | 5,5 | 100 | 1,09 | 60,8 |
| 2 | A | 5,5 | 80 | 1,113 | 63,3 |
| 3 | A | 4 | 100 | 1,11 | 63,4 |
| 4 | A | 3,2 | 100 | 1,42 | 51 |
| 5 | B | 5,5 | 100 | 1,14 | 51,5 |
| 6 | B | 6,8 | 100 | 1,30 | 39,2 |
| 7 | C | 5,5 | 100 | 1,12 | 50,9 |
| 8 | C | 6,8 | 100 | 1,22 | 38,3 |

Exemple 3

Cet exemple illustre l'aptitude supérieure à l'injection d'un moût traité en milieu acide en comparaison d'un moût traité dont le pH n'a pas été modifié.

5

**0 140 724**

On utilise un moût entier de fermentation contenant 2 % de gomme Xänthane et dont le pH est de 6,8.

Une fraction du moût est amenée à pH 5,5 par addition de $H_2SO_4$. On divise cette fraction en 4 parties aliquotes de 5 l chacune. Chaque partie est traitée à 60 °C ou 100 °C pendant 7 mn 30 sec. ou 15 mn.

A titre comparatif on effectue le même traitement sur une autre fraction de moût dont le pH n'a pas été modifié.

Après traitement et refroidissement à température ambiante, chacun des échantillons est dissous à la concentration de 1 000 ppm en gomme Xanthane en utilisant une solution aqueuse contenant 75 ppm d'ions calcium sous forme de chlorure.

Les échantillons sont soumis au test d'écoulement à pression constante.

Ce test consiste à mesurer le volume de là solution à 1 000 ppm qui filtre à travers une membrane SARTORIUS ayant une dimension de pores de 12 μm (diamètre 47 mm) sous une pression constante de 60 millibars, pendant une durée de 30 minutes.

Tableau III

| Traitement | | | Volume ecoulé en ml |
|---|---|---|---|
| Température | pH | durée | |
| 60 | 5,5 | 7mn 30s | 1840 |
| 100 | 5,5 | 7mn 30s | 1820 |
| 60 | 5,5 | 15mn | 1950 |
| 100 | 5,5 | 15mn | 2420 |
| 60 | 6,8 | 7mn 30s | 690 |
| 100 | 6,8 | 7mn 30s | 926 |
| 60 | 6,8 | 15mn | 920 |
| 100 | 6,8 | 15mn | 784 |

Exemple 4

Cet exemple illustre l'influence du pH, de la température et de la durée du traitement du moût sur l'injectabilité et la viscosité des solutions préparées à partir de poudre de gomme Xanthane.

Après traitement du moût de fermentation dans différentes conditions figurant au tableau IV, le biopolymère est précipité par addition d'isopropane lavé et séché.

Pour chacun des essais, on dissout 1 g de poudre dans de l'eau distillée en agitant à l'aide d'un agitateur à hélice à la température ambiante. Cette solution est diluée dans de la saumure de telle sorte que la solution résultante contienne 1 000 ppm de gomme Xanthane et une concentration en $CaCl_2$ de 75 ppm.

Le tableau IV montre les débits d'écoulement selon le test décrit à l'exemple précédent et les viscosités des solutions préparées à partir du polymère traité en milieu acide et du polymère traité dont le pH n'a pas été modifié.

Tableau IV

| Traitement | | | Volume écoulé en ml | Viscosité en mPa.s |
|---|---|---|---|---|
| Température | pH | durée | | |
| 60 | 5,5 | 7mn 30s | 2450 | 59,8 |
| 100 | 5,5 | 7mn 30s | 1820 | 74 |
| 60 | 5,5 | 15mn | 2090 | 60 |
| 100 | 6,8 | 7mn 30s | 1040 | 62,5 |

6

**0 140 724**

### Exemple 5

Un moût de fermentation contenant 20,4 g/kg de Xanthane est ajusté à pH 5,5 et traité 15′ à 100 °C.

Le moût est ensuite concentré par ultrafiltration en utilisant un module PLEIADE UFP 10 équipé de membranes en acrylonitrile IRIS 3038 (Marques commerciales de la Société Rhône-Poulenc Recherches), d'une superficie de 1,54 m² et dont le seuil de coupure est de 20 000. La vitesse linéaire du moût est de 0,6 m · s$^{-1}$ et sa température est de 40 °C.

Les résultats sont indiqués dans le Tableau V.

La viscosité et l'injectabilité des solutions diluées à 1 000 ppm sont identiques avant et après concentration.

### Exemple 6

On concentre par ultrafiltration un moût de fermentation en utilisant le même appareillage que dans l'exemple 5.

Les essais sont faits en utilisant un moût de fermentation contenant 20 g/kg de Xanthane à la fois sans traitement thermique, avec traitement en milieu acide selon l'invention et avec traitement à pH 7,5.

Dans une première série d'essais on maintient le débit de circulation à une valeur constante et on mesure la perte de charge aux bornes de l'ultrafiltre. On constate que, pour obtenir une solution ayant sensiblement la même concentration, la perte de charge est plus faible lorsque le moût a été traité thermiquement, le traitement à pH 5,5 étant meilleur qu'à pH 7,5.

Dans une deuxième série d'essais on maintient une même perte de charge aux bornes de l'ultrafiltre. On constate que le traitement en milieu acide améliore la possibilité d'obtenir des solutions plus concentrées pour des débits de circulation plus importants en comparaison d'un moût non traité ou d'un moût ayant subi un traitement à pH 7,5.

### Tableau VI

| Traitement | Ultrafiltration | | |
| --- | --- | --- | --- |
| | Débit de circulation en l/h | Perte de charge | Concentration en g/kg$_f$ |
| Non | 90 | 4,3 | 52,0 |
| pH 7,5 100°C 15mn | 87 | 3,5 | 49,6 |
| pH 5,5 100°C 15mn | 87 | 2,65 | 48,4 |
| Non | 43 | 5,7 | 66,4 |
| pH 7,5 100°C 15mn | 52 | 5,5 | 75,2 |
| pH 5,5 100°C 15mn | 48 | 5,5 | 102,0 |

(Voir tableau V page 8)

7

Tableau V

| Durée d'ultrafiltration (mn) | Poids de rétentat kg | Debit de l'ultrafiltrat $1/h.m^2$ | Concentration en gomme Xanthane dans le rétentat g/kg | Viscosité apparente mPa.s | Pressions en bars | |
|---|---|---|---|---|---|---|
| | | | | | Entrée | Sortie |
| 0 | 44 | 17 | 20,4 | 5.000 | 2 | 1 |
| 30' | 30,25 | 18,7 | 29,7 | | | |
| 45' | 22,15 | 21 | 40,5 | | | |
| 60' | 17,15 | 13 | 52,3 | | | |
| 75' | 11,95 | 13,5 | 75,1 | 8.900 | | |
| 90' | 9,58 | 12,1 | 93,7 | 10.800 | 2,8 | 1 |

**Revendications**

1. Procédé pour améliorer la filtrabilité et l'aptitude à l'injection des solutions aqueuses diluées d'hétéropolysaccharides par traitement à la chaleur, caractérisé en ce qu'une solution aqueuse ayant une concentration en hétéropolysaccharide de 0,05 à 20 % en poids est soumise à un chauffage à une température comprise entre 60 et 110 °C pendant une durée de 5 à 45 minutes, le pH de la solution étant compris entre 3,5 et inférieur à 6.

2. Procédé selon la revendication 1 dans lequel la solution est obtenue par dissolution de poudre d'hétéropolysaccharide.

3. Procédé selon la revendication 1 dans lequel la solution est un moût entier de fermentation.

4. Procédé selon la revendication 3 caractérisé en ce que le moût a été concentré par ultrafiltration.

5. Procédé selon l'une des revendications 3 ou 4 caractérisé en ce que le moût est ajusté à un pH compris entre 4 et 5,5 puis est chauffé entre 80 et 100 °C pendant une durée de 15 à 30 minutes.

6. Procédé selon l'une des revendications 1 à 4 caractérisé en ce que, après le traitement thermique, la solution est concentrée par ultrafiltration et/ou purifiée par diafiltration.

7. Procédé selon l'une des revendications 1 à 6 dans lequel un biocide et/ou une enzyme est ajouté à la solution aqueuse, soit avant, soit après le traitement thermique.


**Claims**

1. Process for improving the filterability and the injectability of dilute aqueous solutions of heteropolysaccharides by means of a heat treatment, characterized in that an aqueous solution with a heteropolysaccharide concentration of 0.05 to 20 % by weight is subjected to heating at a temperature of between 60 and 110 °C for a period of 5 to 45 minutes, the pH of the solution being between 3.5 and below 6.

2. Process according to Claim 1, in which the solution is produced by dissolving heteropolysaccharide powder.

3. Process according to Claim 1, in which the solution is a complete fermentation broth.

4. Process according to Claim 3, characterized in that the broth has been concentrated by ultrafiltration.

5. Process according to either of Claims 3 and 4, characterized in that the broth is adjusted to a pH of between 4 and 5.5 and is then heated between 80 and 100 °C for a period of 15 to 30 minutes.

6. Process according to one of Claims 1 to 4, characterized in that, after the heat treatment, the solution is concentrated by ultrafiltration and/or is purified by diafiltration.

7. Process according to one of Claims 1 to 6, in which a biocide and/or an enzyme is added to the aqueous solution, either before or after the heat treatment.


**Patentansprüche**

1. Verfahren zur Verbesserung der Filtrierbarkeit und der Injektions-Eignung von verdünnten wäßrigen Lösungen von Heteropolysacchariden mittels Behandlung in der Wärme, dadurch gekennzeichnet, daß eine wäßrige Lösung mit einer Heteropolysaccharid-Konzentration von 0,05 bis 20 Gew.-% während 5 bis 45 Minuten auf eine Temperatur von 60 bis 110 °C erhitzt wird, wobei der pH-Wert der Lösung zwischen 3, 5 und unterhalb 6 liegt.

2. Verfahren nach Anspruch 1, dadurch gekennzeichnet, daß die Lösung durch Auflösen von Heteropolysaccharid-Pulver erhalten worden ist.

3. Verfahren nach Anspruch 1, dadurch gekennzeichnet, daß die Lösung eine Fermentations-Gesamtbrühe ist.

4. Verfahren nach Anspruch 3, dadurch gekennzeichnet, daß die Brühe mittels Ultrafiltration konzentriert worden ist.

5. Verfahren nach einem der Ansprüche 3 oder 4, dadurch gekennzeichnet, daß die Brühe auf einen pH-Wert von 4 bis 5,5 eingestellt und dann während 15 bis 30 Minuten auf 80 bis 100 °C erhitzt wird.

6. Verfahren nach einem der Ansprüche 1 bis 4, dadurch gekennzeichnet, daß die Lösung nach der Wärmebehandlung mittels Ultrafiltration konzentriert und/oder mittels Diafiltration gereinigt wird.

7. Verfahren nach einem der Ansprüche 1 bis 6, dadurch gekennzeichnet, daß die wäßrige Lösung vor oder nach der Wärmebehandlung mit einem Biocid und/oder einem Enzym versetzt wird.